# FASCICULE DE BREVET EUROPEEN

(11) **EP 0 752 092 B1**
(45) Date de publication et mention de la délivrance du brevet: **31.05.2000**
(21) Numéro de dépôt: 95914386.8
(22) Date de dépôt: 20.03.1995
(51) Int. Cl.: G01F 1/32

(54) **COMPTEUR DE FLUIDE A TOURBILLONS COMPORTANT UN DOUBLE OBSTACLE**
WIRBELSTRÖMUNGSMESSER MIT EINER DOPPELWIDERSTANDSKÖRPERANORDNUNG
VORTEX FLOWMETER WITH A DOUBLE OBSTRUCTION

(30) Priorité: 23.03.1994 FR 9403406
(43) Date de publication de la demande: 08.01.1997
(73) Titulaire: SCHLUMBERGER INDUSTRIES S.A., 92120 Montrouge (FR)
(72) Inventeur: ZIELINSKA, Barbara, F-91120 Palaiseau (FR); ZIKIKOUT, Souad, F-75020 Paris (FR)
(86) Numéro de dépôt international: FR9500339
(87) Numéro de publication internationale: WO9525943

(56) Documents cités:
- EP-A- 0 240 772
- EP-A- 0 408 355
- EP-A- 0 465 182
- EP-A- 0 581 163
- DE-A- 3 242 768
- PATENT ABSTRACTS OF JAPAN vol. 5 no. 115 (P-72) [787] ,24 Juillet 1981 & JP,A,56 057913 (NISSAN JIDOSHA)

## Description

La présente invention est relative à un compteur de fluide à tourbillons comportant au moins deux obstacles aptes à générer des tourbillons de fluide selon un phénomène oscillatoire et permettant d'obtenir un nombre de Strouhal sensiblement constant pour les faibles nombres de Reynolds.

Les compteurs de fluide ou débitmètres à tourbillons sont largement connus et sont généralement constitués d'une conduite dans laquelle circule un fluide dont on souhaite mesurer le volume et/ou le débit. Un obstacle est disposé à l'intérieur de la conduite dans l'écoulement de fluide de telle manière que lorsque l'écoulement de fluide rencontre ledit obstacle des tourbillons de fluide soient générés et se détachent de l'obstacle selon un phénomène oscillatoire. Un tel compteur comprend également des moyens pour déterminer le volume de fluide à partir de ces oscillations. Ces moyens sont la plupart du temps situés sur l'obstacle. Le principe de mesure du volume de fluide dans un tel compteur est basé sur le fait que la fréquence d'oscillation des tourbillons est approximativement proportionnelle à la vitesse du fluide dans la conduite et les moyens précités détectent un signal correspondant aux oscillations desdits tourbillons. Ce signal peut être par exemple une pression différentielle.

Le but d'un compteur de fluide à tourbillons est d'effectuer des mesures précises et fiables du débit ou du volume de fluide traversant la conduite pour de larges gammes de nombres de Reynolds.

Pour ce faire, le nombre de Strouhal qui est égal au rapport du produit de la fréquence d'oscillation par le diamètre de l'obstacle sur la vitesse du fluide doit être constant pour des nombres de Reynolds variés (le nombre de Reynolds étant égal au rapport du produit de la vitesse du fluide par le diamètre de la conduite sur la viscosité dynamique du fluide).

Les différentes recherches menées dans ce domaine au cours des dernières années ont permis de concevoir des compteurs de fluide à tourbillons avec des formes et des tailles d'obstacles optimisées et qui sont tout à fait satisfaisants pour des nombres de Reynolds élevés comme par exemple de l'ordre de 260000.
On connaît par exemple, d'après la demande de brevet EP n°0408355, un débitmètre à tourbillons comprenant une conduite dans laquelle circule le fluide, un double obstacle disposé dans l'écoulement de fluide ainsi que des moyens de mesure de la fréquence de détachement des tourbillons générés par ledit double obstacle.
Ce double obstacle comprend un premier obstacle dit amont de forme allongée dont la face amont a une forme convexe et la face aval est plane ainsi qu'un second obstacle dit aval éloigné du premier et dont la face amont est plane et la face aval a une forme concave ou plane. Cependant, dans le cas particulier d'un gaz, de tels débitmètres ne sont pas adaptés pour mesurer des nombres de Reynolds inférieurs à 146000 et notamment inférieurs à 33000.

En effet, aux nombres de Reynolds élevés, les couches de cisaillement qui se développent sur les bords latéraux de l'obstacle se détachent et forment des tourbillons de fluide dont l'écoulement est qualifié de turbulent et le nombre de Strouhal correspondant est relativement constant.

Par contre, aux faibles nombres de Reynolds, les couches de cisaillement deviennent progressivement laminaires, les tourbillons se forment plus rapidement, ainsi la fréquence d'oscillation desdits tourbillons diminue moins vite que la vitesse du fluide et le nombre de Strouhal augmente rapidement ce qui introduit des erreurs dans la mesure du volume de fluide.
On connaît également d'après le document EP n°0 240 772 un compteur de fluide à tourbillons conforme au préambule de la revendication 1.

La présente invention vise à pallier ces inconvénients en proposant un compteur de fluide à tourbillons pour lequel le nombre de Strouhal est sensiblement constant aux faibles nombres de Reynolds du fluide tout en étant également sensiblement constant pour les nombres de Reynolds élevés afin d'améliorer les performances dudit compteur sur une large gamme de nombres de Reynolds.

La présente invention a pour objet un compteur de fluide à tourbillons comme défini dans la revendication 1.

Lors de la rencontre entre l'écoulement de fluide et l'obstacle amont, il se forme alternativement de part et d'autre des faces latérales dudit obstacle amont une couche de cisaillement qui, pour les faibles vitesses, devient progressivement laminaire.

Avantageusement, aux faibles nombres de Reynolds du fluide, le compteur de fluide à tourbillons conforme à l'invention déstabilise la couche de cisaillement qui se détache de l'obstacle amont, devient instable et s'enroule pour former des tourbillons à caractère turbulent ce qui a pour effet de rendre le nombre de Strouhal sensiblement constant.

Selon d'autres caractéristiques de l'invention:
- le rapport d/t est compris entre 4 et 8,
- la distance d₁ est comprise entre 1/4 et 3/4 d,
- la largeur I est comprise entre 0,8 et 1,2 d,
- le rapport d/D est compris entre 0,15 et 0,3,
- les grandes faces de la première partie de l'obstacle aval sont écartées d'une distance comprise entre 0,02 et 0,08d,
- les petites faces de la première partie de l'obstacle aval sont parallèles entre elles,
- les petites faces de la seconde partie de l'obstacle aval ont une dimension transversale comprise entre 0,02 et 0,08d,
- chacune des deux grandes faces de la seconde partie de l'obstacle aval a une dimension parallèle à la direction d'écoulement du fluide qui est comprise entre 0,8 et 1,2d.

Avantageusement, le compteur de fluide à tourbillons selon l'invention comprend également des moyens pour réduire l'effet de turbulence créé par des tourbillons de fluide permanents en forme de fer à cheval ("horseshoe") qui sont générés par la rencontre d'une partie de l'écoulement de fluide correspondant à la couche limite de celui-ci avec l'obstacle amont.
Les moyens pour réduire l'effet de turbulence créé par des tourbillons de fluide permanents sont formés de deux embases ayant chacune au moins une grande face perpendiculaire à la dimension longitudinale des obstacles amont et aval et chacune desdites embases étant assujettie à la portion de conduite de manière à présenter une dimension longitudinale ou épaisseur maximale e en regard de la couche limite de l'écoulement de fluide, lesdits obstacles amont et aval étant fixés par une de leurs extrémités longitudinales opposées à chaque grande face d'une embase de telle façon que chaque embase possède une portion située en amont de l'obstacle amont.
L'épaisseur e de chaque embase est comprise entre 0,03 et 0,05 D.

Chaque portion d'embase possède une extrémité dite amont éloignée de la face amont de l'obstacle amont d'une distance comprise entre 0,1 et 0,4 d.

Selon une autre caractéristique très avantageuse de l'invention, le compteur de fluide à tourbillons comprend en outre des moyens pour séparer les tourbillons de fluide oscillants dits principaux des tourbillons de fluide permanents dits secondaires qui sont générés par la rencontre d'une partie de l'écoulement de fluide correspondant à la couche limite de celui-ci avec l'obstacle amont.
Ces moyens pour séparer les tourbillons de fluide principaux des tourbillons de fluide secondaires sont formés par deux passages ou espaces libres ménagés entre la seconde partie de l'obstacle aval et la portion de conduite de diamètre intérieur D, de part et d'autre des extrémités longitudinales opposées de ladite seconde partie qui sont espacées d'une distance inférieure à h.
Chaque espace libre a une dimension longitudinale maximale comprise entre D/40 et D/20.

Préférentiellement, la portion de conduite de diamètre intérieur D est raccordée, d'une part, en amont à une portion de conduite amont augmentant progressivement vers l'amont ledit diamètre intérieur jusqu'à une valeur D1 et ayant une paroi intérieure qui forme avec la direction d'écoulement du fluide un angle continûment variable, ledit angle ayant une valeur nulle aux endroits de la conduite où le diamètre de ladite portion amont est respectivement égal à D et D1 et, d'autre part, en aval, à une portion de conduite aval ayant une paroi intérieure qui forme brutalement avec la direction d'écoulement du fluide un angle α constant compris entre 9 et 20°, amenant le diamètre intérieur D à la valeur D1. Le diamètre D a une valeur comprise entre 60 et 90% de la valeur du diamètre D1.
La portion de conduite de diamètre intérieur D a une longueur comprise entre 1,5 et 3 fois ledit diamètre intérieur D.
La face amont de l'obstacle amont est placée à une distance de la portion de conduite amont comprise entre 0,5 D1 et D1.

Selon encore d'autres caractéristiques de l'invention:
- les moyens pour détecter le signal correspondant aux oscillations des tourbillons et pour en déduire le volume de fluide comprennent une plaque disposée au milieu de l'écoulement de fluide en aval de l'obstacle aval et dans la portion de conduite de diamètre intérieur D, ladite plaque ayant une dimension longitudinale D perpendiculaire à la direction d'écoulement du fluide et une section transversale rectangulaire constante formée par deux grandes faces dites latérales parallèles à la direction d'écoulement du fluide et deux petites faces dites respectivement amont et aval, deux canaux principaux longitudinaux et parallèles ménagés dans ladite plaque à proximité de ladite face amont, chacun desdits canaux principaux étant relié à une seule desdites faces latérales par l'intermédiaire de plusieurs canaux secondaires perpendiculaires et également répartis, ainsi qu'un capteur relié, d'une part, aux canaux principaux et, d'autre part, à un circuit électronique permettant de déduire le volume de fluide dudit signal détecté,
- la face amont de la plaque a une dimension transversale comprise entre 0,1 et 0,4 fois la dimension transversale d de la face amont de l'obstacle amont,
- la face amont de la plaque est située à une distance de la face amont de l'obstacle amont comprise entre 3 et 7d,
- les canaux principaux ont un diamètre légèrement inférieur à la dimension transversale de la face amont de la plaque et lesdits canaux principaux sont décalés dans la direction d'écoulement du fluide,
- le capteur est un capteur de pression ou un capteur thermique.

D'autres caractéristiques et avantages ressortiront de la description qui va suivre, donnée uniquement à titre d'exemple non limitatif et faite en référence aux dessins annexés sur lesquels:
- la figure 1 est une vue schématique en coupe dans un plan contenant l'axe de symétrie de la conduite d'un compteur de gaz à tourbillons selon un premier mode de réalisation de l'invention,
- la figure 2 est une vue schématique en coupe dans un plan contenant l'axe de symétrie de la conduite et perpendiculaire à celui de la figure 1 du compteur représenté sur cette même figure,
- la figure 3 est une vue schématique agrandie en perspective de la plaque 10 du compteur de gaz à tourbillons représenté aux figures 1 et 2,
- la figure 4 est une vue schématique partielle en perspective d'un deuxième mode de réalisation de l'invention représentant le compteur de gaz à tourbillons illustré par les figures 1 à 3 et équipé de moyens pour réduire l'effet de turbulence créé par des tourbillons de fluide permanents générés par la rencontre d'une partie de l'écoulement de fluide avec l'obstacle amont,
- la figure 5 est une vue schématique en coupe dans un plan parallèle au plan de la figure 1 des moyens selon l'invention représentés à la figure 4,
- la figure 6 est une vue schématique en coupe dans un plan perpendiculaire à l'axe de symétrie de la conduite des moyens selon l'invention représentés aux figures 4 et 5,
- la figure 7 est une vue schématique en coupe dans un plan contenant l'axe de symétrie de la conduite d'un troisième mode de réalisation de l'invention représentant le compteur de gaz à tourbillons illustré par les figures 1 à 3 et équipé de moyens pour séparer les tourbillons de fluide oscillants des tourbillons de fluide permanents,
- la figure 8 est une vue schématique partielle en perspective d'un quatrième mode de réalisation de l'invention représentant le compteur de gaz à tourbillons illustré par les figures 1 à 3 et équipé des moyens représentés respectivement aux figures 4 et 7,
- la figure 9 est une vue schématique en coupe dans un plan contenant l'axe de symétrie de la conduite d'un cinquième mode de réalisation de l'invention représentant le compteur de gaz à tourbillons illustré par les figures 1 à 3 dans une conduite profilée,
- la figure 10 est une vue schématique en coupe dans un plan contenant l'axe de symétrie de la conduite et perpendiculaire à celui de la figure 9 d'un sixième mode de réalisation de l'invention représentant le compteur de gaz à tourbillons illustré par la figure 9 et équipé des moyens représentés respectivement aux figures 4 et 7,
- la figure 11 est une vue schématique en coupe dans un plan contenant l'axe de symétrie de la conduite d'un compteur de gaz à tourbillons comportant un obstacle placé dans une conduite profilée analogue à celle de la figure 9,
- la figure 12 est une vue schématique en perspective de l'obstacle du compteur de gaz à tourbillons représenté à la figure 11,
- la figure 13 est une vue d'un graphique représentant les courbes de calibrations respectivement obtenues pour le compteur de gaz à tourbillons des figures 11 et 12 (A) et le compteur de gaz à tourbillons de la figure 10 (B),
- la figure 14 est une vue d'un graphique représentant les courbes de calibration respectivement obtenues pour le compteur de gaz à tourbillons représenté à la figure 8 (C) et pour le compteur de gaz à tourbillons représenté à la figure 10 (D).
- la figure 15 représente un schéma simplifié d'un circuit électronique de détermination du volume de gaz à partir de la détection de la pression différentielle,
- la figure 16 représente un détecteur de crête qui est utilisé dans le circuit de la figure 15,
- la figure 17 représente l'opération de détection de crête effectuée par le détecteur de crête de la figure 16 sur une crête,
- la figure 18 montre un exemple représentatif des signaux respectifs à l'entrée et à la sortie du détecteur de crête de la figure 16.

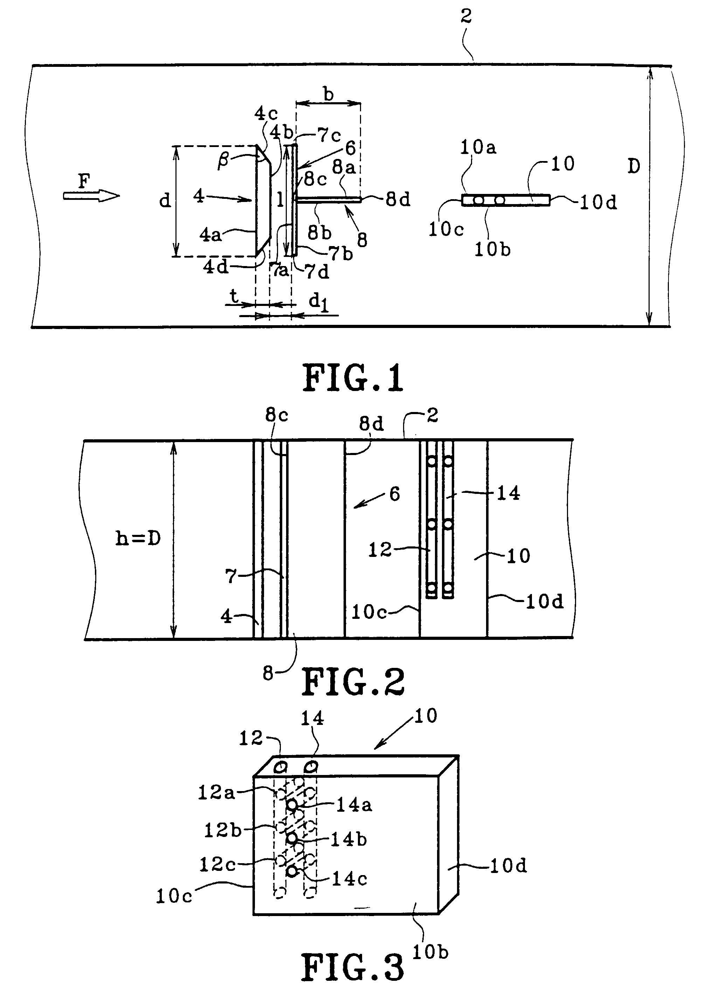

Comme représenté aux figures 1 à 10 et désigné dans son ensemble par la référence notée 1, le compteur de fluide à tourbillons conforme à l'invention est un compteur de gaz.

Un tel compteur comprend une portion de conduite 2 à l'intérieur de laquelle circule le gaz dont on souhaite mesurer le volume.
Ainsi que représenté sur les figures 1 et 2, la portion de conduite 2 a un diamètre intérieur constant D.
Le compteur de gaz à tourbillons selon l'invention comprend également deux obstacles 4 et 6, l'un appelé obstacle amont 4 et l'autre appelé obstacle aval 6, disposés dans la portion de conduite 2 au milieu de l'écoulement de gaz. Il est également possible de prévoir plus de deux obstacles dans le compteur de gaz.
Chacun de ces obstacles a une forme générale allongée dans une direction dite longitudinale qui est perpendiculaire à la direction d'écoulement du gaz et possède une dimension transversale appelée largeur qui est également perpendiculaire à cette direction d'écoulement du gaz.

Tel que représenté à la figure 1, ces obstacles présentent individuellement une section dite transversale qui est sensiblement uniforme suivant leur direction longitudinale. Cette section est contenue dans un plan parallèle à la direction d'écoulement du gaz et perpendiculaire à la direction longitudinale des obstacles.

L'obstacle amont 4 a une dimension longitudinale h appelée hauteur qui est égale à D et présente deux grandes faces 4a et 4b toutes deux perpendiculaires à la direction d'écoulement du gaz et espacées d'une distance t. Une de ces grandes faces 4a est appelée face amont et possède une dimension transversale d alors que l'autre face 4b est appelée face aval et possède une dimension transversale inférieure à d.

Avantageusement, le rapport d/t est compris entre 4 et 8 et est par exemple égal à 5,5.
L'obstacle amont 4 présente également deux petites faces latérales 4c et 4d symétriques par rapport à un plan médian parallèle à la direction d'écoulement du gaz et perpendiculaire au plan de la figure 1.

Chacune de ces faces 4c et 4d forme avec la face amont 4a un même angle β compris entre 30 et 70° et par exemple égal à 58°.
La section transversale de l'obstacle amont a ainsi une forme de trapèze dont la grande base est située vers l'amont.
Il est très important que l'angle β soit le plus petit possible afin que, d'une part, la face amont 4a de l'obstacle amont présente des arêtes aussi vives que possible au droit desquelles vont se former alternativement les couches de cisaillement de l'écoulement de gaz et, d'autre part, la tenue mécanique de l'arête soit suffisante. Ces couches vont ensuite se détacher et former des tourbillons selon un phénomène oscillatoire.
En effet, si l'angle β est trop élevé et si la distance t est trop grande, les couches de cisaillement risquent de se coller sur les parois latérales 4c et 4d de l'obstacle amont ce qui peut gêner le développement de la couche de cisaillement et donc la formation des tourbillons.

Inversement, si l'angle β est inférieur à 30°, l'obstacle est trop mince pour pouvoir résister mécaniquement à l'écoulement du gaz.
L'obstacle aval 6 est formé de deux parties. La première partie 7 a une dimension longitudinale h égale à D et présente deux grandes faces 7a et 7b parallèles entre elles et de même dimension transversale I. Une des faces 7a, appelée face amont, est située à une distance d1 de la face aval 4b de l'obstacle amont 4, parallèlement à celle-ci, ménageant ainsi entre les deux obstacles un espace intermédiaire. L'autre face 7b, appelée face aval, est située à une distance de la face amont 7a. qui est comprise entre 0,02 et 0,08d et par exemple égale à 0,06d. Deux petites faces dites latérales 7c et 7d sont parallèles entre elles et à la direction d'écoulement du gaz et confèrent à la section transversale de la première partie de l'obstacle aval une forme rectangulaire.

Selon une variante non représentée, il convient de noter que les deux petites faces latérales 7c et 7d peuvent également former avec la face amont 7a un même angle compris entre 30 et 70° et conférer ainsi à la première partie 7 de l'obstacle aval 6 une forme de trapèze. Dans un tel cas, la première partie 7 de l'obstacle aval 6 et l'obstacle amont 4 n'ont pas nécessairement une forme rigoureusement identique.

La seconde partie 8 de l'obstacle aval a une dimension longitudinale h égale à D et présente deux grandes faces 8a et 8b de mêmes dimensions qui sont parallèles entre elles et à la direction d'écoulement du gaz.
Deux petites faces 8c et 8d de la seconde partie 8 de l'obstacle aval 6 sont parallèles entre elles et perpendiculaires à la direction d'écoulement du gaz et confèrent à la section transversale de ladite seconde partie de l'obstacle aval une forme rectangulaire. Les deux petites faces 8c et 8d ont une dimension transversale comprise entre 0,02 et 0,08d et par exemple égale à 0,06d.
Pour une dimension transversale inférieure à 0,02d, la rigidité mécanique de la seconde partie de l'obstacle aval 6 n'est pas suffisante. Chacune des grandes faces 8a et 8b a une dimension b parallèle à la direction d'écoulement du gaz, appelée longueur, qui est comprise entre 0,8 et 1,2d et par exemple égale à d.

Les deux parties 7 et 8 précédemment décrites sont assemblées de manière à conférer à la section transversale de l'obstacle aval 6 une forme générale en T.
Au droit de l'une des arêtes vives de l'obstacle amont 4 la couche de cisaillement qui s'est formée se détache puis s'enroule sur elle même pour former un tourbillon en aval de l'obstacle aval 6.

Or, simultanément à la formation de cette couche de cisaillement du côté de la face latérale 4c de l'obstacle amont 4, l'écoulement de gaz est aspiré dans l'espace intermédiaire entre les deux obstacles 4 et 6 par le côté opposé dudit obstacle amont, c'est-à-dire, celui de la face latérale 4d et est expulsé du côté où est formée la couche de cisaillement consécutivement à la formation du tourbillon.

En outre, des mouvements de gaz instationnaires se forment immédiatement en aval de la première partie 7 de l'obstacle aval 6 et en regard des grandes faces 8a et 8b de la seconde partie 8 dudit obstacle aval.

Ces mouvements de gaz correspondent en fait à un phénomène de recirculation qui contribue à désorganiser la structure laminaire de la couche de cisaillement et à la déstabiliser pour lui conférer un caractère turbulent.
Il est donc très important que la distance d1 séparant les deux obstacles 4 et 6 soit judicieusement choisie afin que les deux phénomènes respectivement d'aspiration de l'écoulement de gaz dans l'espace intermédiaire et de recirculation exercent pleinement et simultanément leur fonction.

La distance d1 séparant les deux obstacles doit donc être comprise entre 1/4 et (3/4)d. En effet, au delà de (3/4)d, les tourbillons tendent à se former dans l'espace intermédiaire mais leur formation est perturbée par la présence de l'obstacle aval 6.

Au contraire, si la distance est inférieure à (1/4)d, l'écoulement de gaz ne sera pratiquement pas aspiré dans l'espace intermédiaire, faisant alors perdre tout l'intérêt des deux obstacles et le phénomène de recirculation n'aura presque aucun effet.
De même, il convient de veiller, d'une part, à ce que les faces 7a et 7b de la première partie 7 de l'obstacle aval 6 ne soient pas écartées de plus de 0,08d pour éviter un phénomène de recirculation parasite au droit des petites faces latérales 7c et 7d et, d'autre part, à ce que la dimension transversale de la seconde partie 8 de l'obstacle aval 6 ne soit pas supérieure à 0,08d afin de ne pas réduire l'amplitude des mouvements de gaz instationnaires formés en regard des grandes faces 8a et 8b de ladite seconde partie 8 dudit obstacle aval 6.

Avantageusement, lorsqu'une perturbation provenant de l'amont se propage dans l'écoulement de gaz en direction des deux obstacles, la Demanderesse a pu constater qu'elle n'est pas amplifiée comme l'homme du métier serait tenté de le croire mais, bien au contraire, ladite perturbation est contrôlée par le phénomène de recirculation. Comme représenté sur les figures 1 à 3, le compteur de gaz à tourbillons 1 comprend également des moyens 10 pour détecter le signal correspondant aux oscillations des tourbillons et pour en déduire le volume de gaz. Il faut toutefois remarquer que l'homme du métier est capable de déduire directement un débit de gaz du signal détecté correspondant aux oscillations des tourbillons.
Ces moyens comprennent notamment un élément en forme de plaque 10 disposée dans la portion de conduite 2 au milieu de l'écoulement du gaz. Par exemple, la plaque 10 a une dimension longitudinale D correspondant à sa hauteur et qui est perpendiculaire à la direction d'écoulement du gaz. La plaque 10 est formée, d'une part, de deux grandes faces 10a et 10b parallèles entre elles et à la direction d'écoulement du gaz et appelées faces latérales et, d'autre part, de deux petites faces 10c et 10d parallèles entre elles et perpendiculaires auxdites grandes faces et appelées respectivement faces amont 10c et aval 10d. Comme représenté sur les figures 1 et 3, ces faces confèrent à la section transversale de la plaque 10 une forme rectangulaire constante suivant sa hauteur.
En effet, la plaque 10 et notamment la dimension transversale de la face amont 10c qui est comprise entre 0,1 et 0,4 d, par exemple égale à 0,2d, constitue un obstacle aux arêtes vives provoquant un décollement de l'écoulement du gaz au contact de ladite face amont 10c appelée également bord d'attaque, créant ainsi une zone turbulente, alternativement en contact avec chacune des faces latérales 10a et 10b de ladite plaque 10.
La création de cette zone turbulente tend à améliorer la qualité de l'information véhiculée par les tourbillons.

Par ailleurs, la face amont 10c de la plaque est avantageusement disposée à une distance de la face amont 4a de l'obstacle amont 4 comprise entre 3 et 7 d afin de récupérer le meilleur signal possible sur l'oscillation des tourbillons.
De plus, la Demanderesse a découvert de manière surprenante que, lors de la rencontre des tourbillons avec la plaque 10, une onde acoustique est créée et se propage vers l'amont, perturbant la structure de la couche de cisaillement et accentuant par là même le caractère turbulent des tourbillons pour les faibles vitesses de gaz.

Deux canaux principaux 12 et 14 parallèles entre eux sont ménagés longitudinalement dans la plaque 10 à proximité de la face amont 14c. Ces canaux 12 et 14 s'étendent à l'intérieur de la plaque 14 depuis la partie supérieure de celle-ci jusqu'à une distance inférieure à la hauteur D de ladite plaque. Plusieurs canaux secondaires 12a, 12b, 12c et 14a, 14b, 14c sont également répartis le long de la dimension longitudinale des canaux principaux 12 et 14 de manière à relier perpendiculairement chacun desdits canaux principaux à une seule des faces latérales 10a, 10b de la plaque 10.
Par exemple, chaque canal principal 12, (resp. 14) est relié à une des faces latérales 10a, (resp. 10b) de la plaque 10 par l'intermédiaire de trois canaux secondaires12a, 12b, 12c, (resp. 14a, 14b, 14c) de diamètre sensiblement égal à celui des canaux principaux. Les deux canaux principaux 12, 14 sont reliés par exemple par l'intermédiaire d'un flexible à un capteur thermique non représenté qui va détecter l'écoulement provoqué par la pression différentielle induite dans les canaux par l'oscillation des tourbillons. Le capteur peut également être un capteur de pression.

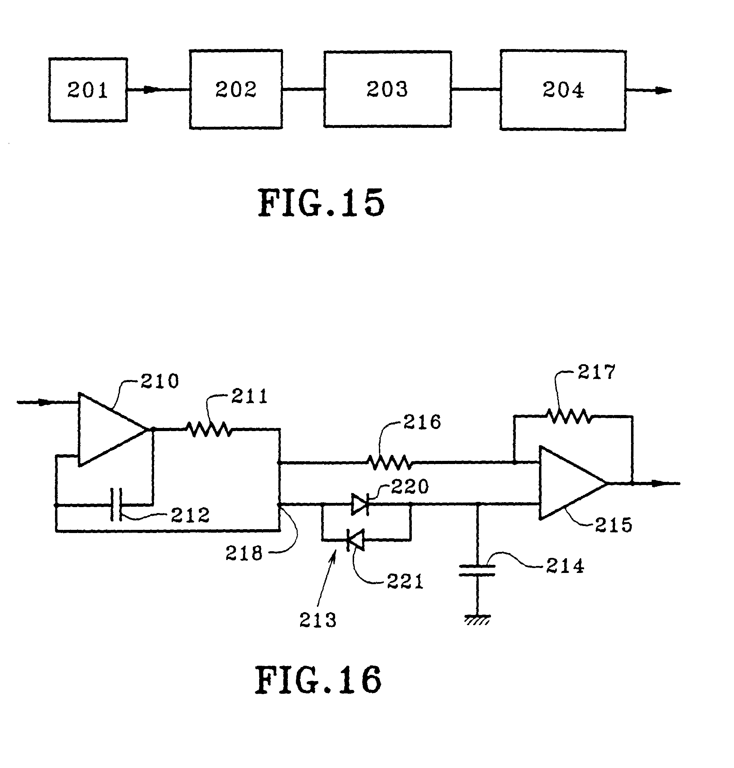

La figure 15 représente un schéma bloc simplifié d'un circuit électronique permettant, à partir de la détection de la pression différentielle par le capteur 201, successivement de délivrer au moyen d'un amplificateur 202 un signal alternatif à l'entrée d'un détecteur de crête 203, de transformer au moyen dudit détecteur de crête, ce signal alternatif délivré en un signal impulsionnel où chaque impulsion représente un volume unitaire de gaz et de compter ensuite à l'aide d'un compteur 204 le nombre d'impulsions pour obtenir un volume de gaz.

Comme représenté à la Figure 16 un détecteur de crête 203 comprend par exemple un amplificateur 210 avec une résistance 211 et un condensateur 212, un dispositif à seuil 213 comprenant deux diodes 220, 221 montées tête-bêche, un condensateur 214 jouant le rôle d'une mémoire, un amplificateur différentiel 215 et des résistances 216, 217. Chaque diode 220 ou 221 peut être la jonction d'un transistor à effet de champ.

L'amplificateur 210, la résistance 211 et le condensateur 212 isolent le signal à l'entrée du condensateur 214. Chaque diode est caractérisée par un seuil et affiche une chute de tension lorsqu'elle est dans un état conducteur ou passant. Lorsque l'amplitude du signal au point 218 augmente au dessus du seuil de la diode 220, la diode sera dans un état conducteur et la valeur du signal de tension au point 218 diminuée de la chute de tension de la diode 220 sera mémorisée dans le condensateur 214. L'amplificateur différentiel 215 compare la valeur de la tension au point 218 avec la valeur de la tension du condensateur 214 et fournit un signal élévé lorsque la tension au point 218 est supérieure à la tension du condensateur 214.

Lorsqu'une crête est atteinte et que l'amplitude du signal diminue, la différence entre la valeur du signal au point 218 et la valeur du signal mémorisée par le condensateur 214 tombe au dessous du seuil de la diode 220 et la diode 220 devient alors non-conductrice. La valeur du signal mémorisée dans le condensateur 214 est alors fixée. Quand l'amplitude du signal au point 218 chute au dessous de la valeur du signal mémorisé par le condensateur 214, l'amplificateur 215 fournit un signal bas montrant qu'une crête s'est présentée. Quand l'amplitude du signal chute au dessous de la valeur du signal mémorisée dans le condensateur 214 d'une valeur correspondant au seuil de la diode 221, celle-ci devient passante et la valeur du signal mémorisée dans le condensateur 214 chute avec la valeur du signal au point 218 diminuée de la valeur de la chute de tension de la diode 221. Quand une crête négative est atteinte et passée, la diode 221 deviendra encore non-conductrice et l'amplificateur 215 indiquera un changement d'état quand le signal au point 218 augmentera au dessus de la valeur du signal mémorisée dans le condensateur 214.

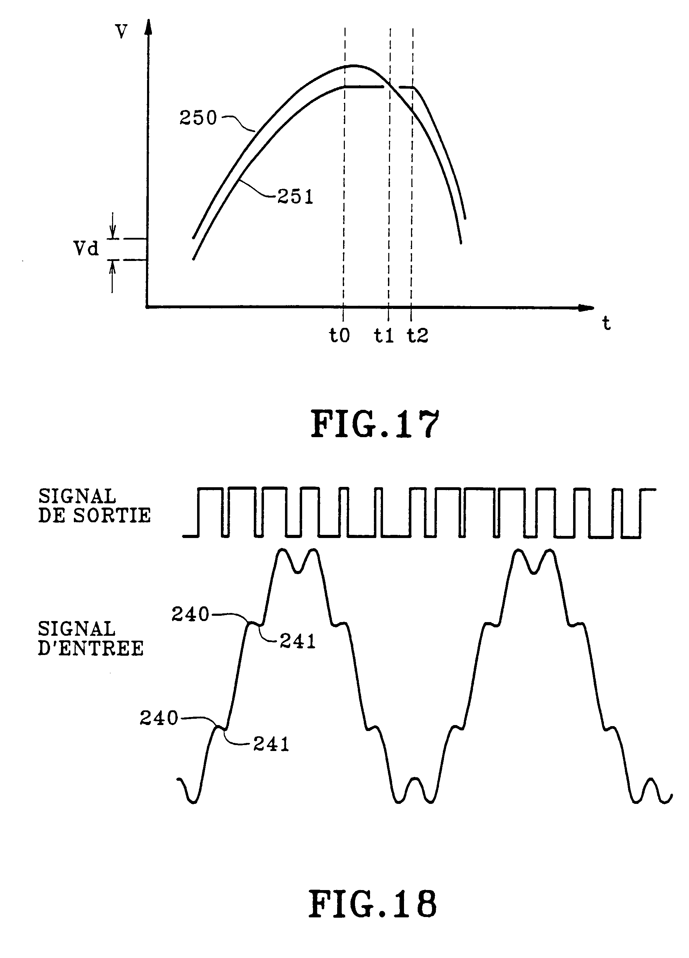

La figure 17 montre la variation de la tension du premier signal au point 218 par la courbe 250 et la variation de la tension du condensateur par la courbe 251. Au début, la tension du condensateur 251 est égale à la tension du signal 250 diminuée de la valeur Vd correspondant à la chute de tension de la diode 220 et l'amplificateur 215 fournit un signal élevé.

Quand une crête est atteinte au temps t0 et que la tension du signal 250 diminue en dessous de la valeur de seuil de la diode 220, la tension du condensateur 251 est fixée. Au temps t1 la tension du signal 250 chute en dessous de la tension mémorisée dans le condensateur 251 et la sortie de l'amplificateur 215 fournit un signal bas. Au temps t2 la différence entre la tension du signal 250 et la tension mémorisée dans le condensateur est plus grande que la valeur du seuil de la diode 221 et la tension du condensateur suit encore la tension du premier signal.

La Figure 18 montre le signal de sortie du circuit de la Figure 16 par comparaison avec un exemple de signal d'entrée. On peut considérer le signal d'entrée comme un signal sinusoïdal de fréquence élevée mais d'une amplitude faible superposée à un bruit de grande amplitude qui produit de grandes variations d'amplitude du signal. Malgré ces variations, le changement du sens du signal d'entrée à chaque crête positive 240 ou à chaque crête négative 241 est marqué par un changement du sens du signal de sortie. Le signal de sortie peut être utilisé immédiatement par le compteur 204 pour délivrer le nombre d'impulsions et donc le volume de gaz. Connaissant le temps entre deux impulsions, il est également très facile d'obtenir la valeur du débit de gaz.

Le diamètre des canaux principaux 12, 14 est légèrement inférieur à la largeur de la plaque 10 si bien que lesdits canaux sont décalés dans la direction d'écoulement du gaz. Ces canaux sont disposés le plus près possible du bord d'attaque 10c de ladite plaque 10 afin de récupérer la meilleure information possible sur le signal.
En outre, les canaux permettent de filtrer tous les bruits accompagnant le signal en raison des forces de viscosités que rencontre le gaz dans lesdits canaux et l'on obtient donc un rapport signal/bruit amélioré.

Pour des raisons liées à la qualité de l'information récupérée par la plaque 10 et le capteur, il faut que la dimension transversale I de la face amont 7a de la première partie 7 de l'obstacle aval 6 soit comprise entre 0,8 et 1,2d et par exemple égale àd.

Si I est supérieure à 1,2d, la plaque 10 ne récupère presque aucun signal. Inversement, si I est inférieure à 0,9d, le signal récupéré par la plaque 10 est entaché d'erreurs.

Selon une variante de l'invention, non représentée sur les figures, les moyens pour détecter le signal correspondant aux oscillations des tourbillons et pour en déduire le volume de gaz comprennent notamment deux transducteurs ultrasonores situés en aval du double obstacle 4, 6 et assujettis aux parois de la portion de conduite 2 de manière diamétralement opposée (dans cette variante, il n'est pas utile de prévoir une plaque comme celle décrite précédemment). L'un des transducteurs émet un signal ultrasonore qui est modulé par les oscillations des tourbillons, reçu par l'autre transducteur et démodulé afin de déduire la fréquence d'oscillation et donc le débit et le volume de gaz.
La Demanderesse s'est aperçue que la fréquence d'oscillation obtenue avec le compteur de gaz à tourbillons selon l'invention est plus faible que celle obtenue avec un compteur qui ne comporte qu'un seul obstacle.

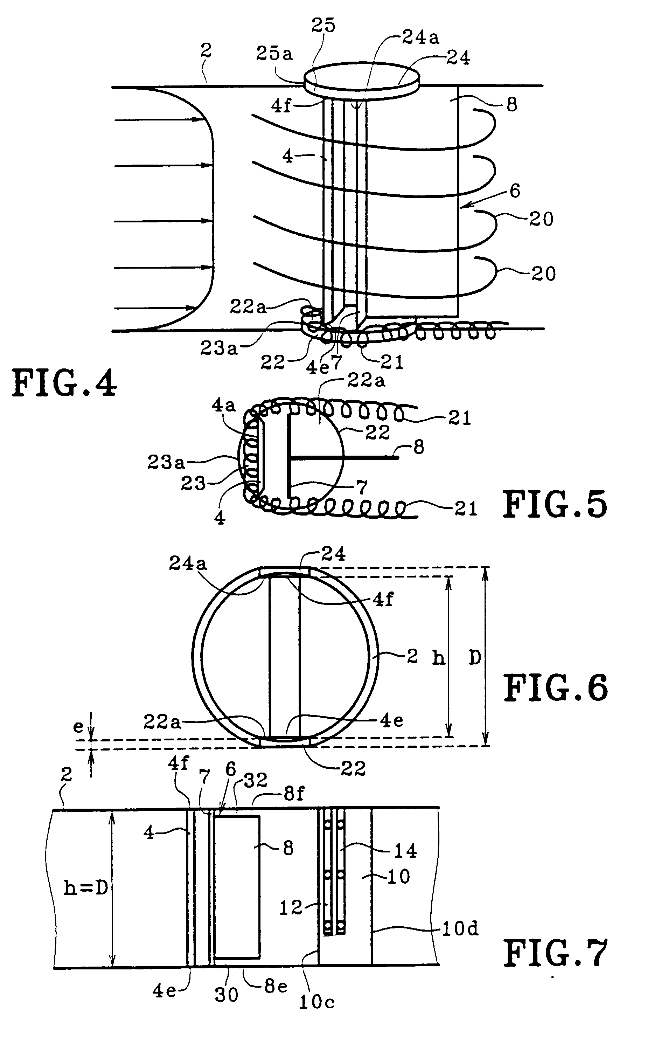

Le profil de vitesse de l'écoulement de gaz immédiatement en amont de l'obstacle amont 4 n'est pas complètement plat ainsi que représenté sur la figure 4 et possède une couche limite au voisinage de la périphérie de la portion de conduite 2. Lorsque l'écoulement de gaz représenté sur la gauche de la figure 4 rencontre l'obstacle amont 4, il se forme alternativement de part et d'autre dudit obstacle amont une couche de cisaillement qui forme en aval de l'obstacle aval 6 des tourbillons 20 appelés tourbillons principaux.
Cependant, la couche limite de l'écoulement de gaz crée en rencontrant l'obstacle 4 un tourbillon permanent, dit secondaire 21. Ce tourbillon se forme à chacune des extrémités longitudinales 4e et 4f de l'obstacle amont 4 et perturbe la formation des tourbillons principaux 20. Sur la figure 4, seul un tourbillon est représenté.
Selon un deuxième mode de réalisation de l'invention représenté aux figures 4 à 6, le compteur de gaz à tourbillons comporte des moyens 22, 23, 24, 25 pour réduire l'effet de turbulence créé par ces tourbillons secondaires 21.

Ces moyens sont formés de deux embases 22, 24 parallèles entre elles et ayant chacune au moins une grande face 22a, 24a qui est perpendiculaire à la dimension longitudinale des obstacles amont 4 et aval 6. Chaque embase 22, 24 a une forme de disque présentant une certaine épaisseur ou dimension longitudinale et un diamètre supérieur à la dimension transversale maximale d de l'obstacle amont 4 (Fig. 5). Les deux embases 22, 24 sont assujetties à la paroi intérieure de la portion de conduite 2 de diamètre intérieur D de manière diamétralement opposée afin qu'une des grandes faces 22a de l'embase 22 soit tournée vers l'intérieur de ladite portion de conduite et en vis-à-vis d'une des grandes faces 24a de l'autre embase 24.
Chacune des embases 22, 24 est partiellement logée dans la portion de conduite 2, ainsi que représenté sur la figure 6, de manière à ce qu'une partie d'épaisseur maximale e de l'embase, inférieure à l'épaisseur totale de ladite embase fasse saillie à l'intérieur de ladite portion de conduite 2. L'épaisseur e est comprise entre 0,03 et 0,05 D afin que la partie saillante de ces embases soit ainsi face à la couche limite de l'écoulement de gaz. En effet, si l'épaisseur e est inférieure à 0,03D, l'effet de turbulence créé par les tourbillons secondaires 21 n'est pas suffisamment réduit. En revanche, si cette épaisseur est supérieure à 0,05D, I' écoulement du gaz risque d'être gêné par la partie saillante des embases 22, 24 ce qui peut perturber la formation des tourbillons principaux 20.
Les obstacles amont 4 et aval 6 sont fixés chacun par une de leurs extrémités longitudinales opposées 4e, 4f, 6e, et 6f à chacune des grandes faces 22a, 24a des embases 22, 24 situées en face l'une de l'autre.

Comme représenté sur la figure 5, l'obstacle amont 4 est monté sur l'embase 22 appelée embase inférieure de telle façon que chaque embase 22, 24 possède une portion respectivement 23, 25 située en amont de l'obstacle amont 4.
Ainsi, la couche limite de l'écoulement de gaz rencontre d'abord une portion d'embase 23 de l'embase inférieure 22 avant de rencontrer l'obstacle amont 4 et ceci a pour effet d'affaiblir le tourbillon secondaire 21 permanent qui se forme en rencontrant ledit obstacle amont 4.
Par conséquent, l'interaction entre ce tourbillon secondaire 21 et les tourbillons principaux 20 est réduite. Il va de soi, que le même phénomène se produit au droit de l'autre embase 24 appelée embase supérieure.
Chaque portion d'embase possède une extrémité dite amont 23a, 25a qui est éloignée de la face amont 4a de l'obstacle amont 4 d'une distance comprise entre 0,1 et 0,4d et par exemple égale à 0,35d.
Dans le cas où cette distance est supérieure à 0,4d, les tourbillons secondaires 21 sont affaiblis mais peuvent se reformer et de nouveau être suffisamment forts pour perturber les tourbillons principaux 20.
Dans cette configuration, la première partie 7 de l'obstacle aval 6 est montée sensiblement sur la partie de l'embase qui présente le plus grand diamètre, transversalement à la direction d'écoulement du gaz. De cette manière, une portion de longueur de la seconde partie 8 de l'obstacle aval 6 dépasse de l'embase vers l'aval (Fig. 5).
La Demanderesse s'est toutefois aperçue qu'il pouvait être également avantageux dans certains cas de laisser se former les tourbillons secondaires 21 et de prévoir en aval de l'obstacle amont 4 des moyens 30, 32 pour séparer lesdits tourbillons secondaires des tourbillons principaux.
Selon un troisième mode de réalisation de l'invention représenté à la figure 7, ces moyens sont formés par deux passages 30, 32 diamétralement opposés dans la portion de conduite 2. Chacun des passages 30, 32 est ménagé entre l'une des extrémités longitudinales 8e, 8f de la seconde partie 8 de l'obstacle aval 6 et la portion de conduite 2.
Dans cette disposition avantageuse, la seconde partie 8 de l'obstacle aval 6 a une dimension longitudinale ou hauteur inférieure à la dimension longitudinale h de la première partie 7 dudit obstacle aval.

Lorsque la couche limite de l'écoulement de gaz heurte l'obstacle amont 4, de forts tourbillons secondaires se forment au droit des extrémités longitudinales opposées 4e et 4f dudit obstacle amont 4 et se propagent à la rencontre des tourbillons principaux. Cependant, la formation des tourbillons principaux crée une dépression qui tend à entraîner les tourbillons secondaires vers la seconde partie 8 de l'obstacle aval 6, en direction des passages inférieur 30 et supérieur 32, empêchant ainsi lesdits tourbillons secondaires d'interagir avec lesdits tourbillons principaux et donc de perturber la détection du signal. Chaque passage 30, 32 a par exemple une forme sensiblement rectangulaire dont la dimension longitudinale est comprise entre 1/40 et (1/20)D et par exemple égale à (1/36)D.

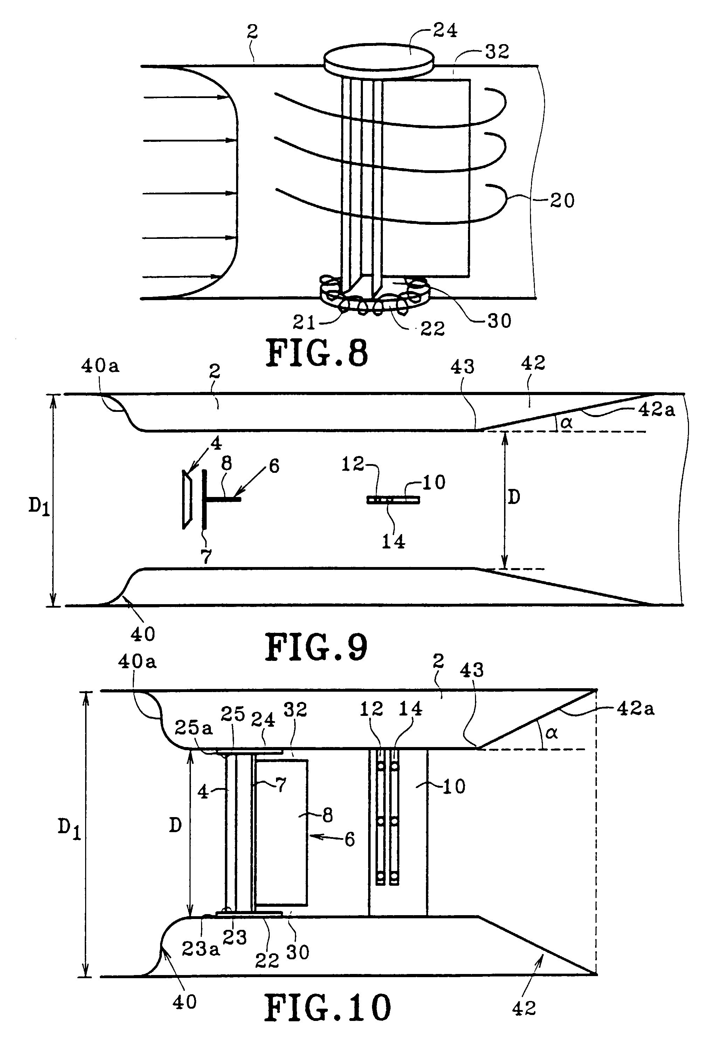

En effet, si la dimension longitudinale de chaque passage 30, 32 est supérieure à (1/20) D, le phénomène de recirculation qui a lieu en regard des grandes faces 8a, 8b de la seconde partie 8 de l'obstacle aval risque d'être gêné et la formation des tourbillons principaux peut se trouver compromise.
Inversement, pour une dimension longitudinale inférieure à 1/40 D, l'effet de la dépression qui s'exerce sur les tourbillons secondaires est moins bénéfique et l'interaction de ces tourbillons avec les tourbillons principaux est trop importante.
Selon un quatrième mode de réalisation de l'invention représenté à la figure 8, il peut être avantageux de réunir les moyens 22, 24 pour réduire l'effet de turbulence créé par les tourbillons secondaires 21, décrits en référence aux figures 4 à 6, et les moyens 30, 32 pour séparer lesdits tourbillons secondaires 21 des tourbillons principaux 20 tels que décrits en référence à la figure 7.
En réunissant ces moyens, l'effet obtenu permet de diminuer considérablement l'interaction entre les tourbillons secondaires 21 et les tourbillons principaux 20.
Un cinquième mode de réalisation de l'invention est représenté à la figure 9 et dans la description qui suit les références des figures précédentes seront conservées. Le compteur de fluide à tourbillons comprend les deux obstacles 4 et 6 ainsi que la plaque 10 pourvue des canaux longitudinaux 12, 14 reliés à un capteur comme précédemment décrit.
Selon ce mode de réalisation, la portion de conduite 2 de diamètre D dans laquelle sont disposés les deux obstacles 4 et 6 et la plaque 10 est raccordée en amont à une portion de conduite dite amont 40 dont le profil intérieur a un diamètre variable qui augmente vers l'amont jusqu'à une valeur D1, valeur du diamètre de la conduite dite principale. La portion de conduite amont 40 a une paroi intérieure 40a qui forme avec la direction d'écoulement du gaz un angle continûment variable depuis l'intersection de ladite paroi intérieure avec la portion de conduite 2 de diamètre intérieur D, intersection pour laquelle ledit angle prend une valeur nulle, jusqu'à l'endroit où la portion de conduite amont 40 a un diamètre intérieur égal à D1 et pour lequel l'angle prend de nouveau une valeur nulle.
Cette disposition est tout à fait avantageuse étant donné que l'écoulement de gaz provenant de l'amont du compteur ne rencontre pas d'arêtes vives lors de son entrée dans ledit compteur et ainsi il n'est pas perturbé par la formation de turbulence. L'écoulement est ainsi accéléré dans la portion de conduite 2 de diamètre intérieur D ce qui confère au profil de vitesse de l'écoulement un caractère plus proche du régime turbulent et davantage stabilisé.
Par conséquent, pour les faibles nombres de Reynolds de l'écoulement du gaz, la nature de la couche de cisaillement qui se forme sur l'obstacle amont s'écarte du régime laminaire.
Comme représenté sur la figure 9, la paroi intérieure 40a de la portion de conduite amont 40 a dans un plan parallèle à la direction d'écoulement du gaz un profil local formé successivement d'amont en aval de deux arcs de cercles aux concavités inversées et raccordés en un point.
Il convient de noter que les cercles correspondants n'ont pas nécessairement un rayon identique comme c'est le cas à la figure 9. Il est également possible de prévoir un profil intérieur local formé d'une partie d'une courbe sinusoïdale, cette variante n'étant pas représentée.

Le diamètre réduit D de la portion de conduite 2 a une valeur comprise entre 60 et 90% de la valeur du diamètre D1 de la conduite principale. En effet, si la valeur D est inférieure à 60% de la valeur de D1, la perte de charge devient rédhibitoire et la fréquence d'oscillation devient trop élevée pour pouvoir être détectée à l'aide de moyens simples.

Par ailleurs, pour une valeur de D supérieure à 90% de la valeur D1, l'écoulement de gaz n'est pas suffisamment accéléré.
Préférentiellement, le diamètre D a une valeur comprise entre 70 et 80% de la valeur du diamètre initial D1 et par exemple égale à 72% de D1.
En outre, la portion de conduite 2 de diamètre intérieur D a une longueur comprise entre 1,5 et 3 fois ledit diamètre D et par exemple égale à 2D.
Cette caractéristique permet, d'une part, de bénéficier d'un espace suffisant pour que les tourbillons oscillants puissent se former et, d'autre part, de conférer au compteur de gaz une bonne compacité.
Dans la portion de conduite 2 de diamètre intérieur D, l'obstacle amont 4 est placé à proximité de la portion de conduite amont 40 pour laisser suffisamment d'espace en aval à la formation des tourbillons oscillants.
Plus précisément, la face amont 4a de l'obstacle amont 4 est placée à une distance de la portion de conduite amont 40 comprise entre 0,5D1 et D1.
En effet, pour une distance inférieure à 0,5D1, l'écoulement de gaz qui atteint l'obstacle amont 4 présente un profil de vitesse qui n'est pas encore stabilisé.
Inversement, si la distance est supérieure à D1, d'une part, le profil de vitesse de l'écoulement de gaz développe une couche limite pouvant induire de forts tourbillons secondaires qui risquent de perturber les tourbillons oscillants (principaux) et, d'autre part, le compteur de gaz perd de sa compacité.
La portion de conduite 2 de diamètre intérieur D est raccordée en aval à une portion de conduite dite aval 42 dont la paroi intérieure 42a forme avec la direction d'écoulement du gaz un angle α constant. Le raccordement entre les deux portions de conduite 2 et 42 présente une arête vive 43.
La portion de conduite aval 42 a une paroi intérieure 42a de forme tronconique qui s'étend depuis l'arête vive 43 jusqu'à la conduite principale de diamètre D1.
En raison de l'expansion brusque de la conduite selon un angle donné après la portion droite de conduite 2 dans laquelle sont formés les tourbillons oscillants, il se produit une diminution de la vitesse du gaz et une augmentation de sa pression.

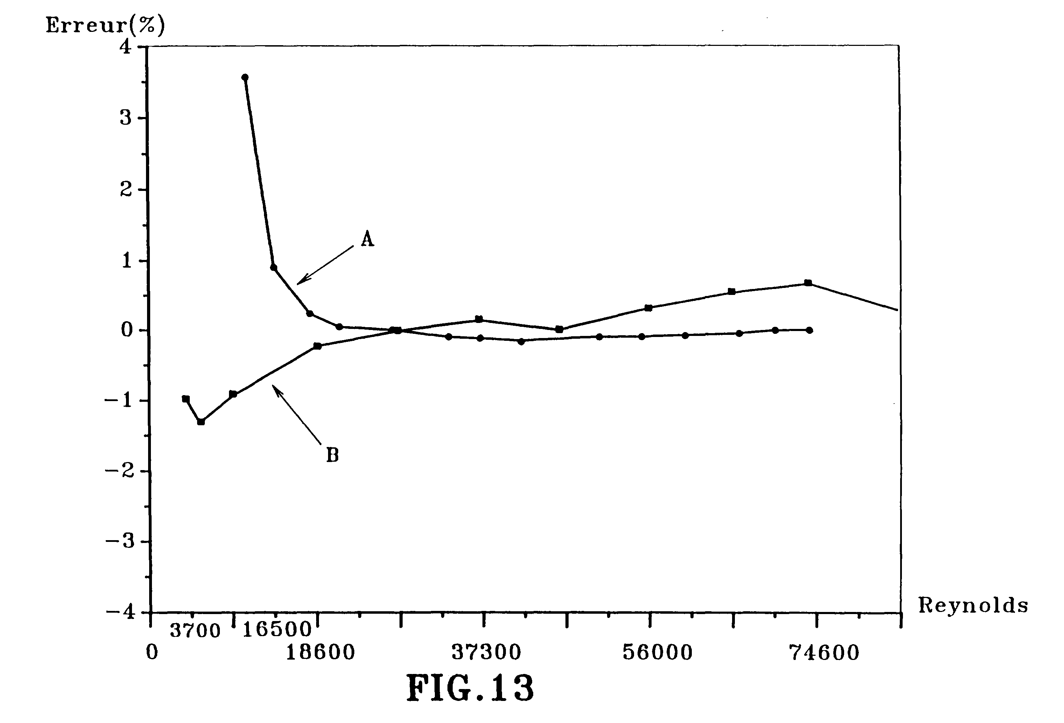

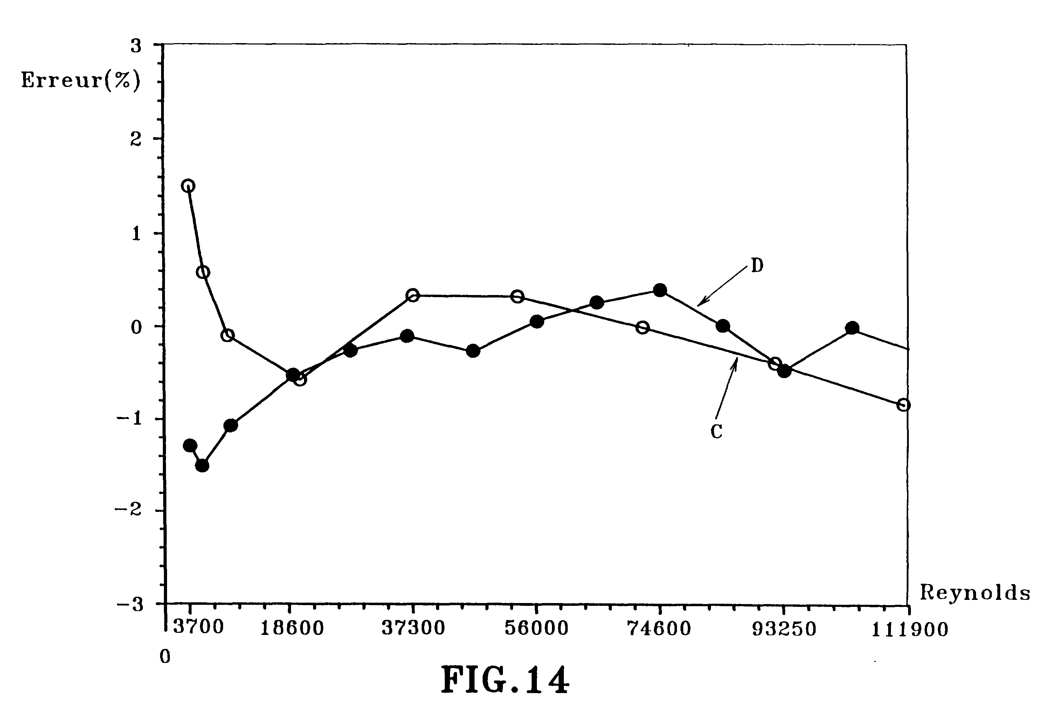

La Demanderesse a pu constater que cette caractéristique de l'invention créait un décollement de l'écoulement de gaz au droit et en aval de l'arête vive 43 et donnait ainsi naissance à une barrière de pression au sortir de la portion de conduite 2.
Cette barrière de pression a pour fonction de confiner les tourbillons de gaz à l'intérieur de la portion de conduite 2 ce qui permet de maintenir constante la taille desdits tourbillons, donc d'avoir un nombre de Strouhal constant, notamment pour les faibles nombres de Reynolds et ainsi d'obtenir une fréquence d'oscillation directement proportionnelle à la vitesse du gaz. L'angle d'expansion de la portion de conduite aval 42 doit être judicieusement choisi pour permettre de ramener la pression à une valeur acceptable. L'angle α est généralement compris entre 9 et 20°, de préférence entre 10 et 15°, et par exemple égal à 10,78°. En effet, un angle d'expansion supérieur à 20° produirait une recirculation de gaz intense et la variation de vitesse du gaz induite conduirait à accroître la turbulence du gaz et non pas à créer une barrière de pression efficace pour maintenir constante la taille des tourbillons. Par ailleurs, pour un angle d'expansion inférieur à 9°, la pression augmenterait graduellement le long de la portion de conduite aval 42 ce qui serait insuffisant pour maîtriser la taille des tourbillons.
Selon un sixième mode de réalisation de l'invention, il est possible et très avantageux de combiner les caractéristiques du compteur de gaz à tourbillons de la figure 9 avec celles du compteur de la figure 8. On obtient alors le compteur de gaz à tourbillons représenté à la figure 10 et qui comporte deux obstacles amont 4 et aval 6 montés à leurs extrémités longitudinales opposées 4e, 4f, 6e, 6f sur deux embases 22, 24 partiellement encastrées dans la portion de conduite droite 2 afin de réduire l'effet de turbulence créé par les tourbillons de gaz permanents secondaires générés par la rencontre de la couche limite de l'écoulement avec l'obstacle amont 4.
En outre, la seconde partie 8 de l'obstacle aval 6 a une dimension longitudinale inférieure à la dimension longitudinale h de la première partie 7 afin de ménager deux passages inférieur 30 et supérieur 32 entre ladite seconde partie 8 de l'obstacle aval 6 et la portion de conduite 2 de diamètre intérieur D, ces passages de forme sensiblement rectangulaire permettant de séparer les tourbillons secondaires des tourbillons principaux.
Une plaque 10 pourvue de canaux longitudinaux 12, 14 reliés à un capteur par exemple thermique non représenté et permettant de détecter le signal correspondant aux oscillations des tourbillons principaux est prévue dans la portion de conduite 2 de diamètre intérieur D, en aval des obstacles.
Comme décrit précédemment, le capteur est relié au circuit électronique représenté aux figures 15 et 16 qui permet de déduire le volume de gaz à partir de la détection de la pression différentielle.
La portion de conduite 2 est raccordée, d'une part, en amont à une portion de conduite amont 40 profilée de manière à créer une accélération du gaz sans perturbation et, d'autre part, en aval à une portion de conduite aval 42 de forme intérieure tronconique présentant une arête vive 43 à l'endroit du raccordement avec ladite portion de conduite 2 ce qui a pour effet de créer une surpression qui confine les tourbillons principaux dans la portion droite de conduite.
Un tel compteur de gaz permet de mesurer des volumes de gaz pour de très faibles nombres de Reynolds jusqu'à des valeurs de 3700 avec une dynamique de 30:1 et avec une erreur relative de ±1%.
Il convient de préciser que le nombre de Reynolds est évalué pour l'écoulement de gaz dans la conduite de diamètre D1.
Afin de montrer les avantages du compteur de fluide à tourbillons selon la présente invention, la Demanderesse a procédé à des essais dont les résultats sont représentés aux figures 13 et 14.

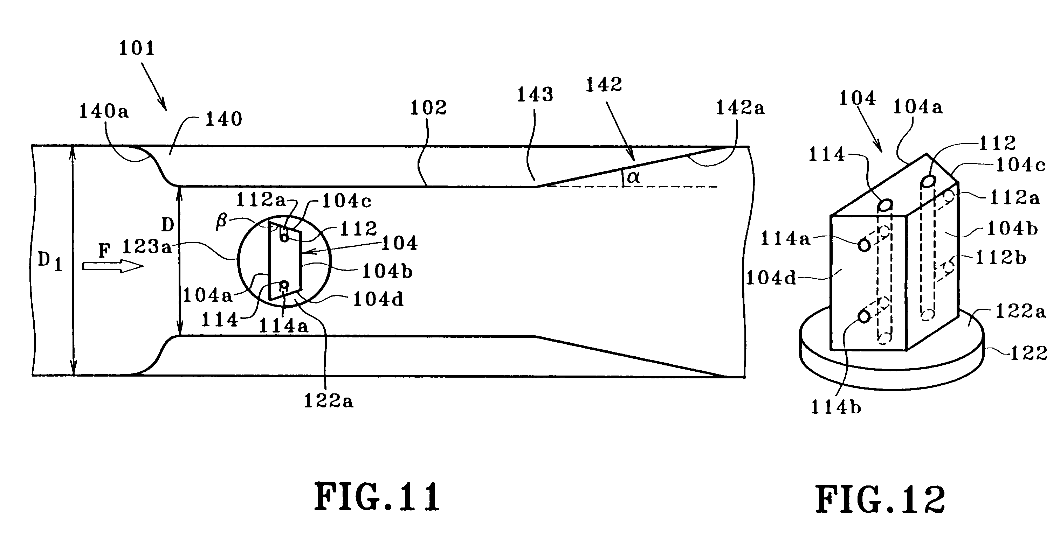

Un premier essai a été pratiqué consécutivement sur deux compteurs de gaz à tourbillons dont le premier est représenté aux figures 11 et 12 et le second est celui représenté à la figure 10. Les diamètres D1 des deux conduites sont égaux à 100mm. Le compteur des figures 11 et 12 diffère de celui de la figure 10 en ce qu'il ne comprend qu'un seul obstacle de dimensions différentes, apte à générer des tourbillons oscillants et en ce que les moyens pour détecter le signal correspondant aux oscillations desdits tourbillons et pour en déduire le volume de gaz sont assujettis audit obstacle.
Hormis ces différences, tout ce qui a été décrit précédemment concernant la conduite profilée, la position de l'obstacle dans la conduite, les embases et leur disposition par rapport à ladite conduite et audit obstacle reste valable et ne sera pas répété ci-après.
Les numéros attribués aux différents éléments des figures 11 et 12 seront les mêmes que ceux des éléments correspondant des figures précédentes précédés du numéro 1.
Ainsi, le compteur de gaz à tourbillons 101 comprend une portion de conduite 102 dans laquelle est placée un obstacle 104. L'obstacle 104 présente une face amont 104a et une face aval 104b, toutes les deux planes et parallèles entre elles, ladite face amont 104a étant plus grande que ladite face aval 104b. Le plan de ces deux faces est perpendiculaire à la direction d'écoulement du gaz.
L'obstacle 104 présente également deux faces latérales 104c et 104d symétriques qui forment avec la face amont 104a un angle β constant de manière à conférer à la section transversale dudit obstacle une forme trapézoïdale dont la base est située vers l'amont.
Sur les figures 11 et 12, il est visible que les moyens pour détecter le signal correspondant aux oscillations des tourbillons et pour en déduire le volume du gaz comprennent deux canaux principaux 112 et 114 parallèles entre eux et ménagés longitudinalement dans l'obstacle 104 à proximité des faces latérales 104c et 104d dudit obstacle. Ces canaux 112 et 114 sont symétriques par rapport à un plan médian contenant l'axe de symétrie de la conduite et perpendiculaire au plan contenant la section transversale de l'obstacle 104. Les moyens précités comprennent également plusieurs canaux secondaires, par exemple au nombre de deux par canal principal, 112a, 112b et 114a, 114b et qui sont également répartis le long de la dimension longitudinale des canaux principaux 112 et 114, perpendiculairement audits canaux principaux. Ces canaux secondaires relient les canaux principaux aux faces latérales 104c et 104d de l'obstacle 104. Les canaux secondaires 112a, 112b, 114a, 114b ont un diamètre sensiblement égal à celui des canaux principaux. Chacun des canaux principaux 112 et 114 est relié par exemple à un capteur thermique non représenté qui va détecter l'écoulement provoqué par la pression différentielle induite dans lesdits canaux principaux par le détachement des tourbillons.
Un circuit électronique classique tel que représenté aux figures 15 et 16 permet alors de déduire le volume de gaz de la détection de cette pression différentielle comme cela a déjà été expliqué.
L'obstacle 104 est monté sur deux embases circulaires 122 et 124 dont une seule, l'embase inférieure 122 est représentée sur les figures 11 et 12.
La face amont 104a de l'obstacle 104 est placée à une distance égale à 0,35d de l'extrémité amont 123a (resp. 125a) de la portion 123 (resp.125) de l'embase 122 (resp.124) qui est située en amont de ladite face amont 104a. L'angle β que forment les faces latérales 104c et 104d de l'obstacle 104 avec la face amont 104a dudit obstacle est égale à 4°. L'essai pratiqué sur ces deux compteurs a consisté à relever l'erreur relative commise sur la détermination du volume de gaz traversant chacun desdits compteurs par rapport à un compteur d'étalonnage, pour des débits compris dans une gamme s'étendant de 20 à 600m³/h correspondant à une gamme de nombres de Reynolds allant de 3700 à 111900.
Ainsi, la figure 13 représente pour chacun des compteurs de gaz l'erreur relative en pourcentage en fonction du nombre de Reynolds et les courbes A et B obtenues sont les courbes de calibrations respectives du compteur de la figure 11 et de celui de la figure 10.
Il apparaît ainsi clairement que le compteur de gaz de la figure 10 (double obstacle) permet de mesurer de manière fiable le volume de gaz pour de faibles nombres de Reynolds allant jusqu'à 3700 alors que le compteur de la figure 11 (simple obstacle) ne permet pas de mesurer de manière fiable le volume de gaz pour un nombre de Reynolds inférieur à 16500.

Un autre essai de même type, dont les résultats sont représentés à la figure 14 a consisté à comparer deux compteurs de gaz conformes à l'invention, l'un étant celui décrit en référence à la figure 8 et l'autre correspondant au mode de réalisation de la figure 10.

Pour ces deux compteurs, il apparaît que les courbes de calibration C et D obtenues respectivement pour les compteurs des figures 8 et 10 sont satisfaisantes et traduisent une bonne linéarité desdits compteurs.
Toutefois, la Demanderesse a observée qu'en dessous d'un nombre de Reynolds égal à 18600, avec le compteur de la figure 8 le bruit est trop important par rapport au signal des oscillations.
Par contre, le fait de placer le double obstacle dans une conduite profilée améliore de manière très significative le rapport signal/bruit pour des nombres de Reynolds inférieurs à 18600 ne nécessitant ainsi que des moyens électroniques simplifiés pour déduire le volume de gaz du signal détecté.
Le mode de réalisation décrit en référence à la figure 10 est donc très avantageux puisqu'il permet d'obtenir un signal très fort et très stable et l'on peut ainsi toujours mesurer le volume de gaz même pour de très faibles nombres de Reynolds de l'ordre de 3700.

## Revendications

1. Compteur de fluide à tourbillons (1) comprenant
- une portion de conduite (2) de diamètre intérieur constant D dans laquelle s'écoule le fluide,
- au moins deux obstacles, l'un dit amont (4) et l'autre dit aval (6), disposés au milieu de l'écoulement de fluide dans ladite portion de conduite (2) et aptes à générer des tourbillons de fluide dits principaux (20) selon un phénomène oscillatoire, chacun desdits obstacles (4, 6) ayant une forme générale allongée de dimensions longitudinales et transversales perpendiculaires à la direction d'écoulement du fluide,
- et des moyens (10, 12, 14, 200 - 221) pour détecter le signal correspondant aux oscillations desdits tourbillons et pour en déduire le volume de fluide, l'obstacle aval (6) étant formé de deux parties (7, 8) reliées entre elles de manière à former sensiblement un T, la première partie (7) de dimensions longitudinale h et transversale I présentant deux grandes faces (7a, 7b) parallèles, l'une dite amont (7a), l'autre étant dite aval (7b) ainsi que deux petites faces (7c, 7d), la seconde partie (8) présentant deux grandes faces (8a, 8b) de mêmes dimensions et parallèles à la direction d'écoulement du fluide ainsi que deux petites faces (8c, 8d) parallèles de mêmes dimensions et perpendiculaires à la direction d'écoulement du fluide, caractérisé en ce que l'obstacle amont (4) de dimension longitudinale h présente deux grandes faces (4a, 4b) perpendiculaires à la direction d'écoulement du fluide et espacées d'une distance t, l'une dite amont (4a) de dimension transversale d supérieure à la dimension transversale de l'autre face dite aval (4b), ainsi que deux petites faces latérales (4c, 4d) symétriques formant chacune avec ladite face amont (4a) un angle β compris entre 30 et 70°, la face amont (7a) de l'obstacle aval (6) étant parallèle à la face aval (4b) dudit obstacle amont (4) et située à une distance d₁ de celle-ci.

2. Compteur de fluide à tourbillons selon la revendication 1, caractérisé en ce que le rapport d/t est compris entre 4 et 8.

3. Compteur de fluide à tourbillons selon l'une des revendications précédentes, caractérisé en ce que la distance d₁ est comprise entre 1/4 et 3/4 d.

4. Compteur de fluide à tourbillons selon l'une des revendications précédentes, caractérisé en ce que la dimension transversale ou la largeur I est comprise entre 0,8 et 1,2d.

5. Compteur de fluide à tourbillons selon l'une des revendications précédentes, caractérisé en ce que le rapport d/D est compris entre 0,15 et 0,3.

6. Compteur de fluide à tourbillons selon l'une des revendications précédentes, caractérisé en ce que les grandes faces (7a, 7b) de la première partie (7) de l'obstacle aval (6) sont écartées d'une distance comprise entre 0,02 et 0,08d.

7. Compteur de fluide à tourbillons selon l'une des revendications précédentes, caractérisé en ce que les petites faces (7c, 7d) de la première partie (7) de l'obstacle aval (6) sont parallèles entre elles.

8. Compteur de fluide à tourbillons selon l'une des revendications précédentes, caractérisé en ce que les petites faces (8c, 8d) de la seconde partie (8) de l'obstacle aval (6) ont une dimension transversale comprise entre 0,02 et 0.08d.

9. Compteur de fluide à tourbillons selon l'une des revendications précédentes, caractérisé en ce que chacune des deux grandes faces (8a, 8b) de la seconde partie (8) de l'obstacle aval (6) a une dimension parallèle à la direction d'écoulement du fluide qui est comprise entre 0,8 et 1,2d.

10. Compteur de fluide à tourbillons selon l'une des revendications précédentes, caractérisé en ce qu'il comprend également des moyens (22, 23, 24, 25) pour réduire l'effet de turbulence créé par des tourbillons de fluide permanents (21) qui sont générés par la rencontre d'une partie de l'écoulement de fluide correspondant à la couche limite de celui-ci avec l'obstacle amont (4).

11. Compteur de fluide à tourbillons selon la revendication 10, caractérisé en ce que les moyens pour réduire l'effet de turbulence créé par des tourbillons de fluide permanents (21) sont formés de deux embases (22,24) ayant chacune au moins une grande face (22a, 24a) perpendiculaire à la dimension longitudinale des obstacles amont (4) et aval (6) et chacune desdites embases étant assujettie à la portion de conduite (2) de manière à présenter une dimension longitudinale ou épaisseur maximale e en regard de la couche limite de l'écoulement de fluide, lesdits obstacles amont (4) et aval (6) étant fixés par une de leurs extrémités longitudinales opposées (4e, 4f, 6e, 6f) à chaque grande face (22a, 24a) d'une embase (22, 24) de telle façon que chaque embase possède une portion (23, 25) située en amont de l'obstacle amont (4).

12. Compteur de fluide à tourbillons selon la revendication 11, caractérisé en ce que l'épaisseur maximale e de chaque embase (22, 24) est comprise entre 0,03 et 0,05D.

13. Compteur de fluide à tourbillons selon la revendication 11, caractérisé en ce que chaque portion d'embase (23, 25) possède une extrémité dite amont (23a, 25a) éloignée de la face amont (4a) de l'obstacle amont (4) d'une distance comprise entre 0,1 et 0,4d.

14. Compteur de fluide à tourbillons selon l'une des revendications précédentes, caractérisé en ce qu'il comprend en outre des moyens (30, 32) pour séparer les tourbillons de fluide oscillants dits principaux (20) des tourbillons de fluide permanents dits secondaires (21) qui sont générés par la rencontre d'une partie de l'écoulement de fluide correspondant à la couche limite de celui-ci avec l'obstacle amont (4).

15. Compteur de fluide à tourbillons selon la revendication 14, caractérisé en ce que les moyens pour séparer les tourbillons de fluide principaux (20) des tourbillons de fluide secondaires (21) sont formés par deux passages (30, 32) ménagés entre la seconde partie (8) de l'obstacle aval (6) et la portion de conduite (2) de diamètre intérieur D, de part et d'autre des extrémités longitudinales opposées (8e, 8f) de ladite seconde partie (8) qui sont espacées d'une distance inférieure à h.

16. Compteur de fluide à tourbillons selon la revendication 15, caractérisé en ce que chaque passage (30, 32) a une dimension longitudinale maximale comprise entre D/40 et D/20.

17. Compteur de fluide à tourbillons selon l'une des revendications 1 à 16, caractérisé en ce que la portion de conduite (2) de diamètre intérieur D est raccordée, d'une part, en amont à une portion de conduite amont (40) augmentant progressivement vers l'amont ledit diamètre intérieur jusqu'à une valeur D1 et ayant une paroi intérieure (40a) qui forme avec la direction d'écoulement du fluide un angle continûment variable, ledit angle ayant une valeur nulle aux endroits de la conduite où le diamètre de ladite portion amont est respectivement égal à D et D1 et, d'autre part, en aval, à une portion de conduite aval (42) ayant une paroi intérieure (42a) qui forme brutalement avec la direction d'écoulement du fluide un angle α constant compris entre 9 et 20", amenant le diamètre intérieur D à la valeur D1.

18. Compteur de fluide à tourbillons selon la revendication 17, caractérisé en ce que le diamètre D a une valeur comprise entre 60 et 90% de la valeur du diamètre D1.

19. Compteur de fluide à tourbillons selon la revendication 17, caractérisé en ce que la portion de conduite (2) de diamètre intérieur D a une longueur comprise entre 1,5 et 3 fois ledit diamètre intérieur D.

20. Compteur de fluide à tourbillons selon les revendications 1 et 17, caractérisé en ce que la face amont (4a) de l'obstacle amont (4) est placée à une distance de la portion de conduite amont (40) comprise entre 0,5 D1 et D1.

21. Compteur de fluide à tourbillons selon l'une des revendications précédentes, caractérisé en ce que les moyens pour détecter le signal correspondant aux oscillations des tourbillons et pour en déduire le volume de fluide comprennent une plaque (10) disposée au milieu de l'écoulement de fluide en aval de l'obstacle aval (6) et dans la portion de conduite (2) de diamètre intérieur D, ladite plaque ayant une dimension longitudinale D perpendiculaire à la direction d'écoulement du fluide et une section transversale rectangulaire constante formée par deux grandes faces dites latérales (10a, 10b) parallèles à la direction d'écoulement du fluide et deux petites faces (10c, 10d) dites respectivement amont et aval, deux canaux principaux (12, 14) longitudinaux et parallèles ménagés dans ladite plaque (10) à proximité de ladite face amont (10c), chacun desdits canaux principaux étant relié à une seule desdites faces latérales (10a, 10b) par l'intermédiaire de plusieurs canaux secondaires perpendiculaires (12a, 12b, 12c, 14a, 14b, 14c) et également répartis, ainsi qu'un capteur relié, d'une part, aux canaux principaux et, d'autre part, à un circuit électronique (202-221) permettant de déduire le volume de fluide dudit signal détecté.

22. Compteur de fluide à tourbillons selon la revendication 21, caractérisé en ce que la face amont (10c) de la plaque (10) a une dimension transversale comprise entre 0,1 et 0,4 fois la dimension transversale d de la face amont (4a) de l'obstacle amont (4).

23. Compteur de fluide à tourbillons selon la revendication 21, caractérisé en ce que la face amont (10c) de la plaque (10) est située à une distance de la face amont (4a) de l'obstacle amont (4) comprise entre 3 et 7d.

24. Compteur de fluide à tourbillons selon les revendications 21 et 22, caractérisé en ce que les canaux principaux (12, 14) ont un diamètre légèrement inférieur à la dimension transversale de la face amont (10c) de la plaque (10) et en ce que lesdits canaux principaux sont décalés dans la direction d'écoulement du fluide.

25. Compteur de fluide à tourbillons selon la revendication 21, caractérisé en ce que le capteur est un capteur de pression.

26. Compteur de fluide à tourbillons selon la revendication 21, caractérisé en ce que le capteur est un capteur thermique.

## Patentansprüche

1. Wirbelströmungsmesser (1), mit
- einem Leitungsabschnitt (2) mit konstantem Innendurchmesser D, in dem das Fluid strömt,
- wenigstens zwei Hindernissen, wovon eines stromaufseitig (4) und das andere stromabseitig (6) genannt wird, die mitten in der Fluidströmung im Leitungsabschnitt (2) angeordnet sind und sogenannte Hauptfluidwirbel (20) gemäß einem Oszillationsphänomen erzeugen können, wobei jedes der Hindernisse (4, 6) eine langgestreckte allgemeine Form mit longitudinalen und transversalen Abmessungen besitzt, die zur Strömungsrichtung des Fluids senkrecht sind,
- und Mitteln (10, 12, 14, 200-221), die das Signal erfassen, das den Oszillationen der Wirbel entspricht, und daraus das Fluidvolumen ableiten, wobei das stromabseitige Hindernis (6) aus zwei Teilen (7, 8) gebildet ist, die miteinander in der Weise verbunden sind, daß im wesentlichen ein T gebildet wird, wobei das erste Teil (7) mit longitudinalen Abmessungen h und transversalen Abmessungen I zwei parallele Hauptflächen (7a, 7b), wovon eine (7a) stromaufseitig und die andere (7b) stromabseitig genannt wird, sowie zwei Nebenflächen (7c, 7d) aufweist und das zweite Teil (8) zwei Hauptflächen (8a, 8b), die dieselben Abmessungen besitzen und zur Strömungsrichtung des Fluids parallel sind, sowie zwei parallele Nebenflächen (8c, 8d), die dieselben Abmessungen besitzen und zur Strömungsrichtung des Fluids senkrecht sind, aufweist, dadurch gekennzeichnet, daß das stromaufseitige Hindernis (4) mit longitudinaler Abmessung (h) zwei Hauptflächen (4a, 4b), die zur Strömungsrichtung des Fluids senkrecht sind und um eine Strecke t beabstandet sind, wobei die sogenannte stromaufseitige Fläche (4a) eine transversale Abmessung d besitzt, die größer als die transversale Abmessung der anderen sogenannten stromabseitigen Fläche (4b) ist, sowie zwei symmetrische, seitliche Nebenflächen (4c, 4d), die mit der stromaufseitigen Fläche (4a) jeweils einen Winkel β im Bereich von 30 bis 70° bilden, aufweist, wobei die stromaufseitige Fläche (7a) des stromabseitigen Hindernisses (6) zur stromabseitigen Fläche (4b) des stromaufseitigen Hindernisses (4) parallel ist und sich in einem Abstand d₁ von diesem befindet.

2. Wirbelströmungsmesser nach Anspruch 1, dadurch gekennzeichnet, daß das Verhältnis d/t im Bereich von 4 bis 8 liegt.

3. Wirbelströmungsmesser nach einem der vorhergehenden Ansprüche, dadurch gekennzeichnet, daß die Strecke d₁ im Bereich von 1/4 bis 3/4d liegt.

4. Wirbelströmungsmesser nach einem der vorhergehenden Ansprüche, dadurch gekennzeichnet, daß die transversale Abmessung oder die Breite 1 im Bereich von 0,8 bis 1,2d liegt.

5. Wirbelströmungsmesser nach einem der vorhergehenden Ansprüche, dadurch gekennzeichnet, daß das Verhältnis d/D im Bereich von 0,15 bis 0,3 liegt.

6. Wirbelströmungsmesser nach einem der vorhergehenden Ansprüche, dadurch gekennzeichnet, daß die Hauptflächen (7a, 7b) des ersten Teils (7) des stromabseitigen Hindernisses (6) um eine Strecke im Bereich von 0,02 bis 0,08d beabstandet sind.

7. Wirbelströmungsmesser nach einem der vorhergehenden Ansprüche, dadurch gekennzeichnet, daß die Nebenflächen (7c, 7d) des ersten Teils (7) des stromabseitigen Hindernisses (6) zueinander parallel sind.

8. Wirbelströmungsmesser nach einem der vorhergehenden Ansprüche, dadurch gekennzeichnet, daß die Nebenflächen (8c, 8d) des zweiten Teils (8) des stromabseitigen Hindernisses (6) eine transversale Abmessung im Bereich von 0,02 bis 0,08d haben.

9. Wirbelströmungsmesser nach einem der vorhergehenden Ansprüche, dadurch gekennzeichnet, daß jede der beiden Hauptflächen (8a, 8b) des zweiten Teils (8) des stromabseitigen Hindernisses (6) eine zur Strömungsrichtung des Fluids parallele Abmessung besitzt, die im Bereich von 0,8 bis 1,2d liegt.

10. Wirbelströmungsmesser nach einem der vorhergehenden Ansprüche, dadurch gekennzeichnet, daß er außerdem Mittel (22, 23, 24, 25) umfaßt zum Reduzieren der Turbulenzwirkung, die durch stationäre Fluidwirbel (21) erzeugt wird, die ihrerseits durch das Auftreffen eines Teils der Fluidströmung, der der Grenzschicht dieser Strömung entspricht, auf das stromaufseitige Hindernis (4) erzeugt werden.

11. Wirbelströmungsmesser nach Anspruch 10, dadurch gekennzeichnet, daß die Mittel zum Reduzieren der Turbulenzwirkung, die durch stationäre Fluidwirbel (21) erzeugt wird, aus zwei Fußplatten (22, 24) gebildet sind, die jeweils wenigstens eine zur longitudinalen Abmessung der stromaufseitigen (4) und stromabseitigen (6) Hindernisse senkrechte Hauptfläche (22a, 24a) besitzen und an dem Leitungsabschnitt (2) jeweils in der Weise befestigt sind, daß sie eine maximale longitudinale Abmessung oder Dicke e gegenüber der Grenzschicht der Fluidströmung besitzen, wobei die stromaufseitigen (4) und stromabseitigen (6) Hindernisse mit jeweils einem ihrer gegenüberliegenden longitudinalen Enden (4e, 4f, 6e, 6f) an jeweils einer Hauptfläche (22a, 24a) einer Fußplatte (22, 24) befestigt sind, derart, daß jede Fußplatte einen Abschnitt (23, 25) besitzt, der sich stromaufseitig vom stromaufseitigen Hindernis (4) befindet.

12. Wirbelströmungsmesser nach Anspruch 11, dadurch gekennzeichnet, daß die maximale Dicke e jeder Fußplatte (22, 24) im Bereich von 0,03 bis 0,05D liegt.

13. Wirbelströmungsmesser nach Anspruch 11, dadurch gekennzeichnet, daß jeder Fußplattenabschnitt (23, 25) ein sogenanntes stromaufseitiges Ende (23a, 25a) besitzt, das von der stromaufseitigen Fläche (4a) des stromaufseitigen Hindernisses (4) um eine Strecke im Bereich von 0,1 bis 0,4d entfernt ist.

14. Wirbelströmungsmesser nach einem der vorhergehenden Ansprüche, dadurch gekennzeichnet, daß er außerdem Mittel (30, 32) umfaßt zum Trennen der oszillierenden sogenannten Hauptfluidwirbel (20) von den stationären sogenannten Nebenfluidwirbeln (21), die durch das Auftreffen eines Teils der Fluidströmung, der der Grenzschicht dieser Strömung entspricht, auf dem stromaufseitigen Hindernis (4) erzeugt werden.

15. Wirbelströmungsmesser nach Anspruch 14, dadurch gekennzeichnet, daß die Mittel zum Trennen der Hauptfluidwirbel (20) von den sekundären Fluidwirbeln (21) durch zwei Durchlässe (30, 32) gebildet sind, die zwischen dem zweiten Teil (8) des stromabseitigen Hindernisses (6) und dem Leitungsabschnitt (2) mit Innendurchmesser D beiderseits der gegenüberliegenden longitudinalen Enden (8e, 8f) des zweiten Teils (8) ausgebildet sind und um eine Strecke, die kleiner als h ist, beabstandet sind.

16. Wirbelströmungsmesser nach Anspruch 15, dadurch gekennzeichnet, daß jeder Durchlaß (30, 32) eine maximale longitudinale Abmessung im Bereich von D/40 bis D/20 besitzt.

17. Wirbelströmungsmesser nach einem der Ansprüche 1 bis 16, dadurch gekennzeichnet, daß der Leitungsabschnitt (2) mit Innendurchmesser D einerseits stromaufseitig mit einem stromaufseitigen Leitungsabschnitt (40), dessen Innendurchmesser zur Einlaßseite allmählich bis zu einem Wert D1 zunimmt und eine Innenwand (40a), die in Strömungsrichtung des Fluids einen stetig veränderlichen Winkel bildet, der an den Stellen der Leitung, an denen der Durchmesser des stromaufseitigen Abschnitts D bzw. D1 ist, den Wert null besitzt, und andererseits stromabseitig mit einen stromabseitigen Leitungsabschnitt (42), der eine Innenwand (42a) besitzt, die plötzlich zur Strömungsrichtung des Fluids einen konstanten Winkel α im Bereich von 9 bis 20° bildet und den Innendurchmesser D zum Wert D1 führt, verbunden ist.

18. Wirbelströmungsmesser nach Anspruch 17, dadurch gekennzeichnet, daß der Durchmesser D einen Wert im Bereich von 60 bis 90 % des Wertes des Durchmesser D1 hat.

19. Wirbelströmungsmesser nach Anspruch 17, dadurch gekennzeichnet, daß der Leitungsabschnitt (2) mit Innendurchmesser D eine Länge im Bereich des 1,5- bis 3fachen des Innendurchmessers D hat.

20. Wirbelströmungsmesser nach den Ansprüchen 1 und 17, dadurch gekennzeichnet, daß die stromaufseitige Fläche (4a) des stromaufseitigen Hindernisses (4) in einem Abstand vom stromaufseitigen Leitungsabschnitt (40) angeordnet ist, der im Bereich von 0,5D1 bis D1 liegt.

21. Wirbelströmungsmesser nach einem der vorhergehenden Ansprüche, dadurch gekennzeichnet, daß die Mittel, die das Signal erfassen, das den Oszillationen der Wirbel entspricht, und daraus das Fluidvolumen ableiten, versehen sind mit einer Platte (10), die in der Mitte der Fluidströmung stromabseitig vom stromabseitigen Hindernis (6) und im Leitungsabschnitt (2) mit Innendurchmesser D angeordnet ist und eine longitudinale Abmessung D senkrecht zur Strömungsrichtung des Fluids und einen konstanten rechtwinkligen transversalen Querschnitt besitzt und durch zwei zur Strömungsrichtung des Fluids parallele sogenannte seitliche Hauptflächen (10a, 10b) sowie durch zwei Nebenflächen (10c, 10d), die stromaufseitig bzw. stromabseitig genannt werden, gebildet ist, mit zwei longitudinalen und parallelen Hauptkanälen (12, 14), die in der Platte (10) in der Nähe der stromaufseitigen Fläche (10c) ausgebildet sind und jeweils mit einer einzigen der Seitenflächen (10a, 10b) über mehrere senkrechte und gleich verteilte sekundäre Kanäle (12a, 12b, 12c, 14a, 14b, 14c) verbunden sind, sowie mit einem Sensor, der einerseits mit den Hauptkanälen und andererseits mit einer elektronischen Schaltung (202-221) verbunden ist, die ermöglicht, aus dem erfaßten Signal das Fluidvolumen abzuleiten.

22. Wirbelströmungsmesser nach Anspruch 21, dadurch gekennzeichnet, daß die stromaufseitige Fläche (10c) der Platte (10) eine transversale Abmessung besitzt, die im Bereich vom 0,1- bis 0,4fachen der transversalen Abmessung d der stromaufseitigen Fläche (4a) des stromaufseitigen Hindernisses (4) liegt.

23. Wirbelströmungsmesser nach Anspruch 21, dadurch gekennzeichnet, daß die stromaufseitige Fläche (10c) der Platte (10) sich in einem Abstand von der stromaufseitigen Fläche (4a) des stromaufseitigen Hindernisses (4) befindet, der im Bereich von 3 bis 7d liegt.

24. Wirbelströmungsmesser nach den Ansprüchen 21 und 22, dadurch gekennzeichnet, daß die Hauptkanäle (12, 14) einen etwas kleineren Durchmesser als die transversale Abmessung der stromaufseitigen Fläche (10c) der Platte (10) besitzen und daß die Hauptkanäle in Strömungsrichtung des Fluids versetzt sind.

25. Wirbelströmungsmesser nach Anspruch 21, dadurch gekennzeichnet, daß der Sensor ein Drucksensor ist.

26. Wirbelströmungsmesser nach Anspruch 21, dadurch gekennzeichnet, daß der Sensor ein Wärmesensor ist.

## Claims

1. A vortex fluid meter (1) including:
- a pipe portion (2) of constant inside diameter D in which the fluid flows,
- at least two obstacles, i.e. an upstream obstacle (4) and a downsteam obstacle (6) disposed in the middle of the fluid flow in said pipe portion (2) and adapted to generate main fluid vortices (20) in an oscillatory manner, each of said obstacles (4, 6) having a generally elongate shape with longitudinal and transverse dimensions perpendicular to the direction of flow of the fluid,
- and, means (10, 12, 14, 200-221) for detecting the signal corresponding to the oscillations of said vortices and for deducing therefrom the volume of fluid, the downstream obstacle (6) being in two parts (7, 8) joined together in a T-shape configuration, the first part (7) with longitudinal dimension h and transverse dimension l having two parallel larger faces (7a, 7b), i.e. an upstream face (7a) and a downstream face (7b), and two smaller faces (7c, 7d), the second part (8) having two larger faces (8a, 8b) with the same dimensions and parallel to the direction of flow of the fluid and two parallel smaller faces (8c, 8d) with the same dimensions and perpendicular to the direction of flow of the fluid characterized in that the upstream obstacle (4) of longitudinal dimension h has two larger faces (4a, 4b) perpendicular to the direction of flow of the fluid and spaced by a distance t, an upstream face (4a) of transverse dimension d greater than the transverse dimension of the downstream face (4b) and two symmetrical smaller lateral faces (4c, 4d) each at an angle β lying with the range 30° to 70°, to said upstream face (4a), the upstream face (7a) of the downstream obstacle (6) being parallel to the downstream face (4b) of said upstream obstacle (4) and at a distance d₁ from the latter.

2. A vortex fluid meter according to claim 1 characterized in that the ratio d/t lies in the range 4 to 8.

3. A vortex fluid meter according to any one of the preceding claims characterized in that the distance d₁ lies in the range d/4 to 3d/4.

4. A vortex fluid meter according to any one of the preceding claims characterized in that the width l lies in the range 0.8d to 1.2d.

5. A vortex fluid meter according to any one of the preceding claims characterized in that the ratio d/D lies in the range 0.15 to 0.3.

6. A vortex fluid meter according to any one of the preceding claims characterized in that the larger faces (7a, 7b) of the first part (7) of the downstream obstacle (6) are separated by a distance in the range 0.02d to 0.08d.

7. A vortex fluid meter according to any one of the preceding claims characterized in that the smaller faces (7c, 7d) of the first part (7) of the downstream obstacle (6) are parallel.

8. A vortex fluid meter according to any one of the preceding claims characterized in that the smaller faces (8c, 8d) of the second part (8) of the downstream obstacle (6) have a transverse dimension in the range 0.02d to 0.08d.

9. A vortex fluid meter according to any one of the preceding claims characterized in that each of the two larger faces (8a, 8b) of the second part (8) of the downstream obstacle (6) has a dimension parallel to the direction of flow of the fluid in the range 0.8d to 1.2d.

10. A vortex fluid meter according to any one of the preceding claims characterized in that it further includes means (22, 23, 24, 25) for reducing the effect of turbulence caused by permanent fluid vortices (21) generated by part of the fluid flow corresponding to the boundary layer of the latter encountering the upstream obstacle (4).

11. A vortex fluid meter according to claim 10 characterized in that the means for reducing the effect of turbulence caused by permanent fluid vortices (21) comprise two bases (22, 24) each having at least one larger face (22a, 24a) perpendicular to the longitudinal dimension of the upstream obstacle (4) and the downstream obstacle (6) and each of said bases is attached to the pipe portion (2) in such a way as to have a maximum longitudinal dimension or thickness e facing the boundary layer of the flow of fluid, said upstream obstacle (4) and downstream obstacle (6) being fixed by one of their opposite longitudinal ends (4e, 4f, 6e, 6f) to each larger face (22a, 24a) of a base (22, 24) in such a way that each base has a portion (23, 25) upstream of the upstream obstacle (4).

12. A vortex fluid meter according to claim 11 characterized in that the maximum thickness e of each base (22, 24) lies in the range 0.03D to 0.05D.

13. A vortex fluid meter according to claim 11 characterized in that each base portion (23, 25) has an upstream end (23a, 25a) at a distance from the upstream face (4a) of the upstream obstacle (4) in the range 0.1d to 0.4d.

14. A vortex fluid meter according to any one of the preceding claims characterized in that it further includes means (30, 32) for separating the main oscillatory fluid vortices (20) from the permanent secondary fluid vortices (21) generated by part of the fluid flow corresponding to the boundary layer of the latter encountering the upstream obstacle (4).

15. A vortex fluid meter according to claim 14 characterized in that the means for separating the main oscillatory fluid vortices (20) from the secondary fluid vortices (21) are formed by two passages (30, 32) between the second part (8) of the downstream obstacle (6) and the pipe portion (2) of inside diameter D, on either side of the opposite longitudinal ends (8e, 8f) of said second part (8) which are spaced by a distance less than h.

16. A vortex fluid meter according to claim 15 characterized in that each passage (30, 32) has a maximum longitudinal dimension in the range D/40 to D/20.

17. A vortex fluid meter according to any one of claims 1 to 16 characterized in that the pipe portion (2) of inside diameter D is connected at the upstream end to an upstream pipe portion (40) whose inside diameter increases progressively in the upstream direction to a value D1 and having an inside wall (40a) at a continuously varying angle to the direction of flow of the fluid, said angle having a null value at places in the pipe where the diameter of said upstream portion is respectively equal to D and to D1, and is connected at the downstream end to a downstream pipe portion (42) having an inside wall (42a) which diverges sharply at a constant angle a to the direction of flow of the fluid in the range 9 to 20 , changing from the inside diameter D to the diameter D1.

18. A vortex fluid meter according to claim 17 characterized in that the diameter D lies in the range 60% to 90% of the diameter D1.

19. A vortex fluid meter according to claim 17 characterized in that the pipe portion (2) of inside diameter D has a length in the range 1.5 times to 3 times said inside diameter D.

20. A vortex fluid meter according to claim 1 and claim 17 characterized in that the upstream face (4a) of the upstream obstacle (4) is at a distance from the upstream pipe portion (40) in the range 0.5D1 to D1.

21. A vortex fluid meter according to any one of the preceding claims characterized in that the means for detecting the signal corresponding to the oscillations of the vortices and for deducing therefrom the volume of fluid include a plate (10) disposed in the middle of the flow of fluid downstream of the downstream obstacle (6) and in the pipe portion (2) of inside diameter D, said plate having a longitudinal dimension D perpendicular to the direction of flow of the fluid and a constant rectangular cross-section defined by two lateral larger faces (10a, lOb) parallel to the direction of flow of the fluid and upstream and downstream smaller faces (10c, 10d), two parallel longitudinal main passages (12, 14) formed in said plate (10) near said upstream face (10c), each main passage being connected to one only of said lateral faces (10a, 10b) by a plurality of evenly distributed perpendicular secondary passages (12a, 12b, 12c, 14a, 14b, 14c), and a sensor connected to the main passages and to an electronic circuit (202-221) for deducing the volume of fluid from said detected signal.

22. A vortex fluid meter according to claim 21 characterized in that the upstream face (10c) of the plate (10) has a transverse dimension in the range 0.1 times to 0.4 times the transverse dimension d of the upstream face (4a) of the upstream obstacle (4).

23. A vortex fluid meter according to claim 21 characterized in that the upstream face (10c) of the plate (10) is at a distance from the upstream face (4a) of the upstream obstacle (4) in the range 3d to 7d.

24. A vortex fluid meter according to claim 21 and claim 22 characterized in that the main passages (12, 14) have a diameter slightly smaller that the transverse dimension of the upstream face (10c) of the plate (10) and in that said main passages are offset in the direction of flow of the fluid.

25. A vortex fluid meter according to claim 21 characterized in that the sensor is a pressure sensor.

26. A vortex fluid meter according to claim 21 characterized in that the sensor is a heat sensor.
